Europäisches Patentamt

European Patent Office

Office européen des brevets

(19)

(11) Numéro de publication: **0 017 554**
**B1**

(12) **FASCICULE DE BREVET EUROPEEN**

(45) Date de publication du fascicule du brevet: **21.04.82**

(51) Int. Cl.³: **G 01 P 15/08**

(21) Numéro de dépôt: **80400388.7**

(22) Date de dépôt: **21.03.80**

(54) Accéléromètre à ondes élastiques.

(30) Priorité: **30.03.79 FR 7908090**

(43) Date de publication de la demande:
**15.10.80 Bulletin 80/21**

(45) Mention de la délivrance du brevet:
**21.04.82 Bulletin 82/16**

(84) Etats contractants désignés:
**DE GB**

(56) Documents cités:
**DE - A - 2 754 669**
**FR - A - 2 273 259**
**FR - A - 2 374 625**
**US - A - 3 646 818**
**US - A - 3 739 202**
**US - A - 4 100 811**

(73) Titulaire: **THOMSON-CSF**
**173, Boulevard Haussmann**
**F-75360 Paris Cedex 08 (FR)**

(72) Inventeur: **Maerfeld, Charles**
**"THOMSON-CSF" - SCPI 173, Bld Haussmann**
**F-75360 Paris Cedex 08 (FR)**

(74) Mandataire: **Wang, Pierre et al,**
**"THOMSON-CSF" - SCPI 173, bld. Haussmann**
**F-75360 Paris Cedex 08 (FR)**

Courier Press, Leamington Spa, England.

## Accéléromètre à ondes élastiques

La présente invention se rapporte à des dispositifs de mesure par ondes élastiques de l'accélération d'un mobile, les accéléromètres étant liés à ce mobile.

Il est connu de mesurer l'accélération par la force d'énertie exercée par une masse appelée masse sismique.

Il est connu, par le brevet U.S.A N° 3739202 déposé le 28 Août 1970 au nom de W.G. CADY, de mesurer l'accélération par la force d'intertie d'une masse appelée masse sismique.

Cette masse étant fixée à deux vibrateurs à ondes de volume l'un étant en extension et l'autre en compression. L'accélération est mesurée par la différence des tensions électriques apparaissant aux extrémités des vibrateurs.

Il est connu également de mesurer des forces par la variation de fréquence d'oscillateurs à ondes élastiques soumis à cette force. Des dispositifs permettant de mesurer les forces appliquées à une lame piézoélectrique fléchie ayant des lignes à retard à ondes de surface acoustiques sur chacune des faces sont décrits par le brevet français déposé le 23 Octobre 1973 numéro de publication 2.203976 au nom de SPERRY RAND CORPORATION et dans le brevet U.S.A n° 3.878.477 déposé le 8 Janvier 1974 au nom de HEWLETT—PACKARD.

La force appliquée dans ces dispositifs est normale à la lame et elle est mesurée par la différence de fréquence entre les deux oscillateurs comportant ces lignes acoustiques.

Les performances d'un accéléromètre comportant une masse sismique exerçant une force sur une lame ayant des oscillateurs à lignes à retard sur ces deux faces, sont définies d'une part par la sensibilité exprimée en variation de fréquence par unité d'accélération (on prend généralement 9,81m/sec$^2$) et d'autre part par la bande passante B de l'accéléromètre, lorsque l'accélération varie en fonction du temps.

L'inconvénient dun acéléromètre comportant une lame soumise à une flexion est qu'il ne permet que des bandes passantes de quelques centaines de HX, sinon la sensibilité devient trop faible et ceci malgré la pureté spectrale des oscillateurs à ondes de surface.

Un autre inconvénient est que les contraintes en flexion subies par la lame ne sont homogènes ni dans la direction de propagation des ondes, ni dans l'épaisseur du substrat. L'accéléromètre selon l'invention n'a pas ces inconvénients et en particulier, il permet d'obtenir une bonne sensibilité à l'accélération pour des bandes passantes pouvant atteindre 10 kHZ.

L'accéléromètre suivant l'invention comporte une lame, qui par suite des forces d'inertie a une partie en compression et l'autre en extension. A chacune des deux parties correspond un oscillateur à ondes de surface. Le dispositif suivant l'invention présente en plus l'avantage d'une contrainte homogène ce qui améliore la pureté spectrale de l'oscillateur.

Brièvement, l'accéléromètre suivant l'invention est un acéléromètre à ondes élastiques, comportant un support massif, au moins une lame mince susceptible de propager des ondes élastiques ainsi que des moyens pour réaliser avec elle au moins deux filtres acoustiques, ladite lame étant encastrée dans le support massif ainsi que dans au moins une masse sismique et des moyens permettant de mesurer des variations de phase de ces filtres acoustiques ou des variations de fréquence d'oscillateurs, formés par des filtres associés à des amplificateurs, caractérisé par le fait que l'ensemble des masses sismiques et les encastrements d'une lame au moins dans le support massif délimitent au moins deux portions dans cette lame avec lesquelles sont constituées lesdits au moins deux filtres acoustiques et que sous l'effet de la composante d'une accélération dans la direction de propagation des ondes élastiques les deux portions se déforment selon cette direction l'une en extension (ou compression), l'autre en compression (ou extension), une mesure différentielle de ladite variation de phase ou de fréquence résultante de ces deux déformations fournissant la valeur de la composante de l'accélération suivant la direction de propagation des ondes élastiques.

L'accéléromètre mentionné ci-dessus pourrait être caractérisé en ce que la lame est encastrée rigidement en son milieu dans le pilier central d'un support massif, la lam comportant deux éléments de masses sismiques placés aux deux extrémités.

D'autres avantages et caractéristiques de l'invention resortiront de la description donnée à titre d'exemple et illustrée par les figures qui représentent:

— la figure 1, un schéma de principe d'un oscillateur à ligne à retard;

— la figure 2, un schéma de principe de mesure de l'accélération suivant une direction, suivant l'invention;

— la figure 3, un trièdre avec les composantes de l'accélération;

— la figure 4, la schéma de principe d'un oscillateur à ondes de surface par résonnateurs;

— la figure 5, une lame fléchie et en extension;

— la figure 6, un schéma d'accéléromètre à extension compression suivant l'invention;

— la figure 7, un schéma de mesure de l'accélération dans deux directions suivant l'invention;

— la figure 8, le schéma de mesure de l'accélération suivant les trois directions suivant l'invention;

— la figure 9, le schéma d'un accéléromètre à deux directions suivant l'invention;

— les figures 10 et 11, des exemples de réalisation de l'accéléromètre suivant l'invention.

Il est connu qu'un accéléromètre se compose d'une masse sismique m reliée à un bâti solidaire du mobile, par un élément élastique ayant une raideur k. On sait que la fréquence de résonance $F_r$ d'un tel système est donnée par:

$$F_r = \frac{1}{2\pi} \sqrt{k/m}$$

Si le mobile est soumis à une accélération $\gamma(t)$ qui est fonction du temps t, la masse se déplacera par rapport à sa position d'équilibre en absence d'accélération d'une longueur r(t). Pour qu'il y ait proportionnalité entre r(t) et $\gamma(t)$ il faut que la fréquence de coupure $F_c$ du spectre de $\gamma(t)$ soit telle que $F_c \ll F_r$ et dans ce cas on aura:

$$r(t) = \frac{\gamma(t)}{4\pi^2 F_r^2}$$

Si donc on veut mesurer des accélérations à variations rapides, il faut que la fréquence de résonance soit grande.

Pour l'accéléromètre suivant l'invention, le déplacement r de la masse sismique produit une variation de fréquence $\Delta f$ d'un oscillateur à ondes élastiques à la fréquence f. Cette variation de fréquence $\Delta f$ étant proportionnelle au déplacement r. La sensibilité S d'un tel accéléromètre peut être définie par:

$$S = \frac{\Delta f}{f\gamma} = \frac{a}{F_r^2}$$

où a est une constante.

Il en résulte que pour un accéléromètre à grande bande passante la sensibilité est faible. D'autre part, l'accélération minimum détectable $\delta\gamma$ est donnée par:

$$\delta\gamma = \frac{\delta f}{f} / S$$

où $\delta f/f$ est la pureté spectrale de l'oscillateur, ce qui montre l'intérêt d'un oscillateur à grande pureté spectrale et d'autre part pour une bande passante donnée, d'une grande sensibilité.

Les oscillateurs à onde de surface peuvent avoir une grande pureté spectrale et sont donc particulièrement intéressants puor les mesures d'accélération.

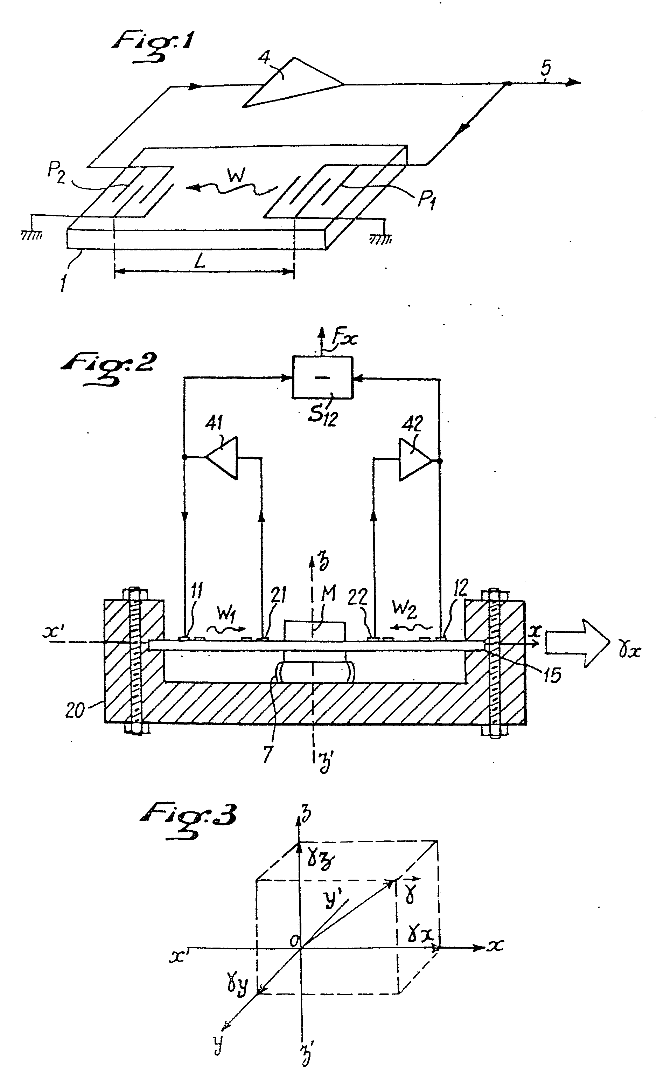

La figure 1 montre le schéma d'un tel oscillateur. Sur un substrat 1 qui est généralement une lame mince en cristal piézoélectrique sont déposés les transducteurs à peignes inter-digités $P_1$ et $P_2$. Une onde élastique de surface W se propageant du transducteur $P_1$ vers le transducteur $P_2$ fournit un signal électrique amplifié par l'amplificateur à grand gain 4. Le signal amplifié est renvoyé sur le transducteur $P_1$ d'une part et sur une sortie d'utilisation 5 d'autre part.

La fréquence d'oscillation est déterminée par la relation:

$$f_o = \frac{V}{L} \left( n - \frac{\varphi_o}{2\pi} \right)$$

où V est la vitesse des ondes sur le parcours moyen de longueur L, $\varphi_o$ le déphasage produit par l'amplificateur 4 et par les transducteurs et n est un nombre entier. n est déterminé par le mode de propagation, par les dimensions et les formes des transducteurs $P_1$ et $P_2$. Les fréquences d'oscillation sont généralement comprises entre quelques dizaines et quelques centaines de MHz.

Sous l'effet d'une grandeur physique extérieure telle que température, pression ou force, le substrat se déforme; cette déformation modifie la fréquence de l'oscillateur car d'une part la longueur L, et d'autre part la vitesse de propagation V varient.

Suivant l'art antérieur, notamment dans le brevet U.S. n° 3,878,477 déjà cité, la force est mesurée par une déformation du substrat en flexion.

La figure 2 montre un exemple de realisation de l'accéléromètre à lame mince en extension et compression suivant l'invention. La figure 2 représente le dispositif de base de l'invention. Il comprend une lamelle de monocristal piézoélectrique 15, par exemple du quartz ou du Niobate de Lithium, dont les extrémités sont encastrées dans un support massif 20. Au milieu de la lamelle est placée une masselotte M avantageusement disposée en deux parties de part et d'autre de la lamelle. Cette masselotte est liée à la lamelle de façon rigide; elle est d'autre part reliée au support par des liaisons souples 7 qui assurent la suspension de celle-ci. La lamelle se trouve divisée en deux parties de longueur L égales, avec lesquelles on constitue deux oscillateurs à ondes élastiques. Dans l'exemple de réalisation représenté sur la figure 2, il s'agit d'oscillateurs à lignes à retard utilisant les ondes élastiques de surface (type Rayleigh) comme représenté sur la figure 1.

A la surface de la lamelle 15 sont disposées symétriquement par rapport à l'axe zz', perpendiculaire à la lamelle passant par le centre de la masselotte M des électrodes ou transducteurs en forme de peignes interdigités 11, 21, 12 et 22.

Des ondes de surface $W_1$ et $W_2$ sont

propagées d'une part entre les électrodes 11 et 21 formant avec l'amplificateur 41 un premier oscillateur $O_1$, d'autre part de l'électrode 12 vers 22 formant avec l'amplificateur 42 un deuxième oscillateur $O_2$ identique au premier. Par ailleurs, les sorties des amplificateurs 41 et 42 sont reliées à un soustracteur de fréquence $S_{12}$ fournissant à sa sortie $F_x$ le signal permettant la mesure de l'accélération.

Lorsque le dispositif n'est soumis à aucune accélération, les deux oscillateurs $O_1$ et $O_2$ entretiennent des oscillations de fréquence égales à $f_o$, de sorte qu'en sortie du soustracteur de fréquence $S_{12}$ la valeur du signal est nulle.

Si le dispositif est soumis à une accélération $\gamma$, orientée par exemple vers la droite comme indiqué par la figure 3, la composante $\gamma_x$ suivant l'axe xx' provoque une force $m\gamma_x$ sur la masse sismique constituée par la masselotte M de masse m, qui a pour effet de comprimer la portion de gauche et de dilater la portion de droite de la lamelle 15 suivant la direction de propagation des ondes élastiques. Il en résulte des variations de longueur et de vitesse de propagation des ondes dans les deux portions, qui provoquent une variation $\Delta f$ de la fréquence $f_o$ des deux oscillateurs $O_1$ et $O_2$ de valeur égale et de signe opposé. Le soustracteur de fréquence $S_{12}$ fournit le signal à la fréquence $F_x = 2\Delta f$ mesurant l'accélération $\gamma_x$.

La composante $\gamma_z$ de l'accélération suivant l'axe zz', applique une force verticale sur la masselotte qui a pour effet de fléchir symétriquement les deux portions de la lamelle vers le centre. Les variations de la fréquence $f_o$ qui en résultent sont de valeur égale et de même signe Le soustracteur $S_{12}$ fournit donc une indication nulle de l'accélération $\gamma_z$ selon l'axe zz'.

Il y a intérêt à limiter l'amplitude des déformations en flexion de la lamelle 15, et dans ce but la suspension 7 est réalisée de manière de manière à présenter une rigidité grande suivant l'axe zz', par exemple à l'aide de lamelles formant ressorts ou bien par un roulement à billes ou à aiguilles. Dans certains cas où la masse sismique reste faible cette suspension peut être supprimée.

Quantà la composante $\gamma_v$, la force appliquée sur 15 engendre une flexion de très petite amplitude étant donné la géométrie de la lame et les variations de la fréquence $f_o$ qui peuvent en résulter fournissent pour les mêmes raisons que lors d'une accélération selon zz', une indication nulle de l'accélération selon yy'.

De même sous l'effet d'une variation de la température ambiante, qui conduit à une dilatation de la lame, on obtient des variations de la fréquence $f_o$ égales et de même signe donnant une indication nulle en sortie.

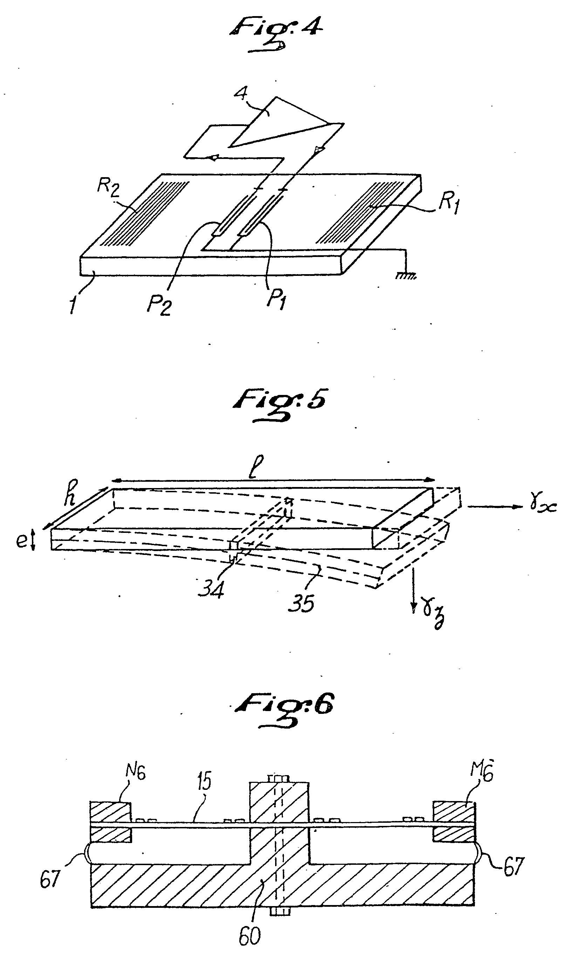

Le dispositif décrit selon l'invention a donc un seul axe sensible dans la direction de propagation des ondes acoustiques. Le dispositif représenté sur la figure 2 est réalisé avec deux oscillateurs à lignes à retard comme indiqué figure 1. Il existe d'autres types d'oscillateurs, utilisant les ondes élastiques de surface à base de résonateurs. La figure 4 représente un oscillateur à résonateurs. A la surface d'un substrat 1, sont gravés deux réseaux $R_1$ et $R_2$, dont les traits sont par exemple des sillons gravés de périodicité P. Ces réseaux sont réflecteurs autour d'une fréquence $f = V/2P$ et délimitent une cavité résonnante dans laquelle s'établit un régime d'ondes stationnaires. Deux transducteurs $P_1$ et $P_2$ disposés à la surface du substrat sont connectés à un amplificateur 4 dont la sortie fournit un signal électrique de fréquence déterminée et plus stable que dans le cas des oscillateurs à lignes à retard. Pour cela le dispositif représenté figure 2 et comportant deux oscillateurs à résonateurs comme indiqué figure 4, est une réalisation préférée de l'invention.

Il est également possible d'utiliser le montage connu des circuits à résonateurs ne comportant qu'un seul transducteur dans la cavité.

Par ailleurs, dans le cas de l'utilisation d'oscillateurs à résonateurs, de meilleurs résultats sont obtenus en compression-extension qu'en flexion. En effet, de manière évidente, la déformation en flexion provoque des écartements différents des deux réseaux gravés $R_1$, $R_2$) et déforme la "cavité résonnante", ce qui réduit la bande passante et la dynamique de l'accéléromètre. En revanche, en compression-extension, la déformation étant homogène, cet inconvénient n'existe pas.

L'avantage de l'accéléromètre à compression-extension par rapport à celui à flexion, suivant l'art antérieur, sera mieux compris par une comparaison des performances de ces deux dispositifs.

La sensibilité S d'un accéléromètre étant la valeur de la variation de la grandeur physique mesurée par unité d'accélération; par exemple dans le cas du dispositif représenté figure 2,

$$S = \frac{2\Delta f}{f\gamma}.$$

La variation de la grandeur physique, par exemple la fréquence d'oscillation, est proportionnelle à la tension T définie comme étant la force par unité de section, de telle sorte que la sensibilité peut être exprimée par le rapport $T/\gamma$ ($\gamma$ composante suivant l'un des axes x, y, z) à un coefficient de proportionnalité a près.

La figure 5 montre une lame mince de longueur 1 de largeur h et d'épaisseur e soumise soit à une flexion en 35 par une accélération $\gamma_z$, soit à une extension par une accélération $\gamma_x$, appelée $T_e$. Si s est le module de compliance suivant xx' du matériau formant la lame, les expressions de la tension T, du coefficient de raideur k et de la sensibilité exprimée en fonction de $\omega_r^2 = k/m$, où $\omega_r = 2\pi F_r$ est la pulsation de résonance, sont pour les deux modes de fonctionnement envisagés;

| Compression-Extension | Flexion |
|---|---|
| $T_e = \dfrac{m\gamma_x}{eh}$ | $T_f = \dfrac{3lm\gamma_z}{e^2h}$ |
| $k_e = \dfrac{1}{s}\dfrac{eh}{l}$ | $k_f = \dfrac{h}{4s}(\dfrac{e}{l})^3$ |
| $S_e = \dfrac{b}{sl\omega_r^2}$ | $S_f = \dfrac{b}{sl\omega_r^2}\dfrac{3}{4}(\dfrac{e}{l})$ |

où la tension $T_f$ pour le mode flexion est considérée en surface où elle est maximum pour un élément situé à l/2, tel que 34 sur la figure 5, et où b est le coefficient de proportionnalité entre la tension et la grandeur physique mesurée. $k_e$ et $k_f$ sont les raideurs correspondant respectivement à la compression-extension et à la flexion. $S_e$ et $S_f$ sont les sensibilités correspondantes.

On constate que la sensibilité pour le mode de flexion $S_f$ correspondant à une force $m\gamma_z$ est plus grande que la sensibilité $S_e$ correspondant à une force $m\gamma_x$ en mode compression-extension puisque e est nettement plus petit que l. En revanche, la sensibilité par rapport à l'accélération pour une fréquence de résonance, c'est-à-dire $\omega_r$ donnée est plus grande dans le mode compression-extension que dans le mode flexion. Autrement dit, pour une même sensibilité, la bande passante dans le mode compression-extension est la plus grande, ce qui est un avantage important selon l'invention.

Par exemple, si on considère une lamelle de quartz de 200 $\mu$m d'épaisseur, de longueur 10 mm et de largeur 2 mm utilisée avec une masse de 20 grammes, on obtient une fréquence de résonance $F_r$ de 2800 Hz pour le mode compression-extension. La sensibilité obtenue est voisine de 3000 Hz/g pour une fréquence d'oscillation de 100 MHz (g = 9,81 m/sec²).

Les oscillateurs décrits précédemment ont une pureté spectrale mesurée par l'écart quadratique des fluctuations de fréquences relatives, de l'ordre de $10^{-10}$ à court terme; de tels résultats sont décrits notamment dans l'article de E. KARRER et R. WARD publié dans ISA transactions, volume 6 (1977) page 90. La plus petite accélération mesurable est donc de l'ordre de $10^{-5}$g. En outre, pour une accélération de 100 g, la contrainte appliquée est égale à 2,3 Pa qui est une valeur très inférieure à la contrainte limite élastique des cristaux en général.

Le même dispositif utilisé en mode flexion aurait une fréquence de résonance de 20 Hz.

D'un autre côté, avec un dispositif comportant une lamelle de 10 mm de longueur, de 15 mm de largeur et de 1 mm d'épaisseur, utilisé avec une masse de 1 gramme en flexion, on obtient une fréquence de résonance $F_r$ proche de celle obtenue avec le dispositif précédent en compression-extension; en revanche, sa sensibilité est égale à 130 Hz/g seulement.

Le dispositif représenté figure 2 peut être mis en oeuvre avantageusement en utilisant non plus des ondes élastiques de surface de type Rayleigh mais des ondes de cisaillement pures, de volume ou de surface telles que les ondes du type Bleustein-Gulyaev (B.G), décrits dans un article de J. L. Bleustein publié dans "Applied Physical Letters", volume 11, (1968), page 412 ou les ondes appelées "Skimming Bulk Waves" (S.B.W.) dans la littérature anglo-américaine, décrits dans un article de H. Lewin dans "Ultrasonic Symposium Proceedings" IEEE 1977, page 744, et du type Auld qui sont relativement pénétrantes. Pour obtenir de telles ondes, le cristal formant la lamelle doit être orienté suivant son axe binaire, ces ondes se propageant parallèlement à la surface suivant la direction d'application de la force de compression/extension. De plus, pour les ondes de type Auld, le substrat comporte un réseau périodique gravé en surface.

Suivant l'invention, l'utilisation d'ondes élastiques de volume est possible du fait que la contrainte subie par la lame propagatrice des ondes est homogène dans le volume, en particulier lorsque la direction d'application de l'accélération est suivant l'axe xx'. En revanche, pour les accéléromètres à flexion, la contrainte n'est pas homogène dans le volume; il y a un allongement du substrat au-dessus de la fibre neutre de la lame fléchie (fig. 5), et une compression au-dessous.

L'utilisation de ce type d'ondes à la place d'ondes de Rayleigh permet d'obtenir pour une même densité de puissance, une plus grande énergie stockée dans le cristal et donc une meilleure pureté spectrale de l'oscillateur. De plus, les ondes de cisaillement pures du type B.G. ou Auld sont suivant certaines coupes, moins sensibles aux variations de température que les ondes de Rayleigh, ce qui est un avantage supplémentaire.

Le dispositif représenté sur la figure 6 constitue une variante de réalisation dont le fonctionnement est basé sur le même principe que le dispositif de base. Le bâti 60 comporte un pilier central dans lequel est encastré le substrat en forme de lamelle 15 dont les extrémités supportent les masses sismiques M6 et N6 reliées par une suspension souple 67 au bâti 60. Les autres éléments du dispositif non figurés restent inchangés par rapport à la figure 2.

Suivant une autre variante, la mesure de la variation de la fréquence d'oscillation de chaque oscillateur peut être remplacée par la mesure de la variation de la phase ou du temps de retard des signaux en sortie de chaque oscillateur; chaque oscillateur constitue un filtre dont la fréquence centrale est la fréquence d'oscillation.

Suivant une autre variante de l'invention, un générateur extérieur à la fréquence $f_g$ est relié aux transducteurs d'entrée. Le signal électrique fourni par le transducteur de sortie est comparé en phase ou en retard avec celui de l'entrée. On remplace ainsi des mesures de fréquence par des mesures de phase ou de temps de retard.

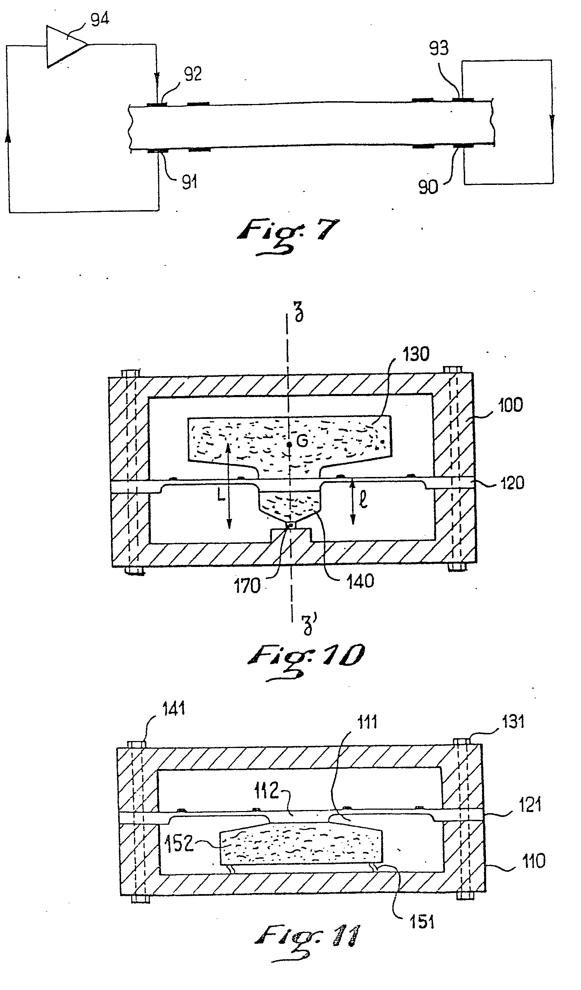

Suivant une variante du dispositif représenté figure 2, les oscillateurs $O_1$ et $O_2$ sont réalisés en utilisant également, les ondes élastiques qui peuvent être propagées par la face inférieure de chaque portion de la lamelle 15 comme représenté par la figure 7, pour une portion. Deux transducteurs 90 et 91 sont disposés sur la face inférieure en regard des transducteurs 93 et 92 de la face supérieure de la lamelle et les tranducteurs 93 et 90 sont reliés entre eux. On réalise ainsi un oscillateur comportant deux lignes à retard en serie en connectant l'amplificateur 94 aux transducteurs 91 et 92. Les performances d'un tel oscillateur sont meilleures en rapport "signal à bruit". Cependant, l'utilisation des deux faces de la lamelle impose des restrictions quant aux types d'ondes acoustiques générées. Il faut éviter l'interférence des ondes propagées dans l'épaisseur de la lamelle c'est-à-dire n'utiliser que des ondes de surface du type Rayleigh ou des ondes superficielles à condition toutefois que la lamelle ne soit pas trop mince. La sensibilité augmentant, quand l'épaisseur de la lamelle diminue, la non-interférence impose d'augmenter la fréquence des ondes de surface pour une pénétration plus faible de ces dernières. Un compromis existe entre cette fréquence et l'absorption acoustique du substrat.

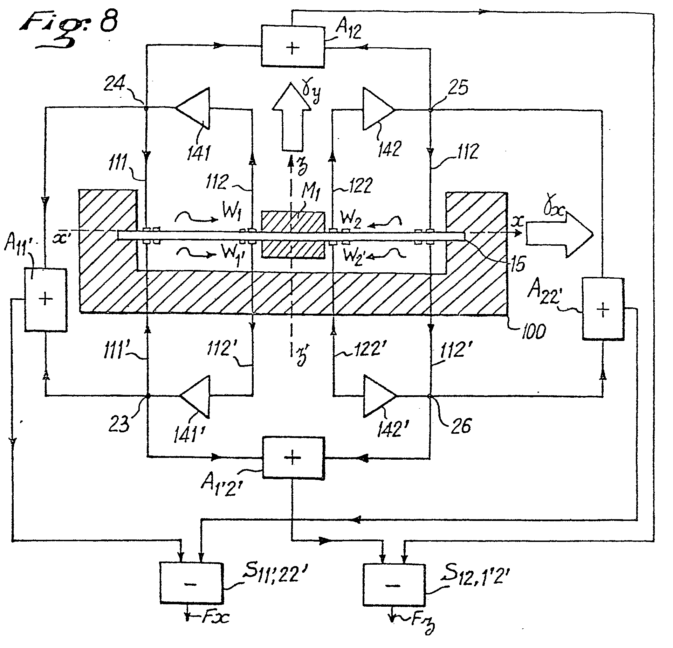

En combinant les déformations en extension-pression et en flexion de la lamelle, on dispose selon une autre réalisation de l'invention, d'un dispositif mesurant l'accélération suivant deux directions xx' et zz'. Ce dispositif est représenté à la figure 8.

Des ondes élastiques $W_1$ et $W_2$ se propageant sur les deux portions de la face supérieure de la lamelle sont utilisées pour obtenir par les amplificateurs 141 et 142 les oscillateurs $O_1$ et $O_2$. De même les ondes élastiques $W'_1$ et $W'_2$ de la face intérieure sont utilisées par les amplificateurs 141' et 142' pour former les oscillateurs $O'_1$ et $O'_2$.

Ces oscillateurs $O_1$, $O_2$, $O'_1$, $O'_2$ formant un ensemble dont la combinaison des variations des fréquences d'oscillations aux déformations en compression-extension et en flexion, permet d'obtenir la mesure différentielle des composantes de l'accélération $\gamma_x$ et $\gamma_z$.

Les sorties 24, 23 des oscillateurs $O_1$, $O'_1$ et les sorties 25, 26 des oscillateurs $O_2$, $O'_2$ sont connectées respectivement à deux sommateurs de fréquences $A_{11}$, et $A_{22}$, qui sont connectés à un soustracteur de fréquences $S_{11'12'}$.

Egalement les sorties 24, 25 des oscillateurs $O_1$, $O_2$ et les sorties 23, 26 des oscillateurs $O'_1$, $O'_2$ sont connectées respectivement à deux sommateurs de fréquences $A_{12}$ et $A_{1\,2'}$ qui sont connectés à un autre soustracteur de fréquences $S_{12\,1'2'}$. Par ailleurs, la suspension liant rigidement la masselotte $M_1$ au support suivant l'axe zz' est supprimée.

Sous l'action de la force suivant l'axe xx', la déformation de la lamelle en compression-extension conduit à la mesure de l'accélération $\gamma_x$ suivant le même processus que pour le dispositif représenté figure 2 avec une déviation de fréquence double $4\Delta f_x$ sur la sortie $F_x$. Sous l'action de la force suivant l'axe zz', la déformation de la lamelle en flexion conduit à la mesure de l'accélération $\gamma_z$. En effet les deux portions de la lamelle fléchissent vers la masse sismique avec une amplitude égale provoquant de part et d'autre de la fibre neutre des contraintes respectivement en extension et en compression; les variations des fréquences d'oscillations correspondant aux oscillateurs utilisant les ondes élastiques de surface de part et d'autre de la fibre neutre sont donc égales et de signe opposé. Ce fonctionnement est bien entendu connu de l'art antérieur. Par conséquent, tel qu'est réalisé le dispositif représenté figure 8, on mesure l'accélération $\gamma_z$ en sortie $F_z$ avec une déviation de fréquence $4\Delta f_z$.

Ce dispositif est caractérisé par le fait qu'il possède deux axes de sensibilité indépendants suivant xx' et zz', les mesures étant obtenues de manière différentielle.

Pour mesurer la composante de l'accélération $\gamma_y$ suivant yy' on peut utiliser un deuxième accéléromètre identique à celui représenté figure 8, les deux accéléromètres étant placés suivant deux axes perpendiculaires; ils fournissent deux valeurs de $\gamma_z$ qui peuvent être moyennées par exemple pour améliorer la précision.

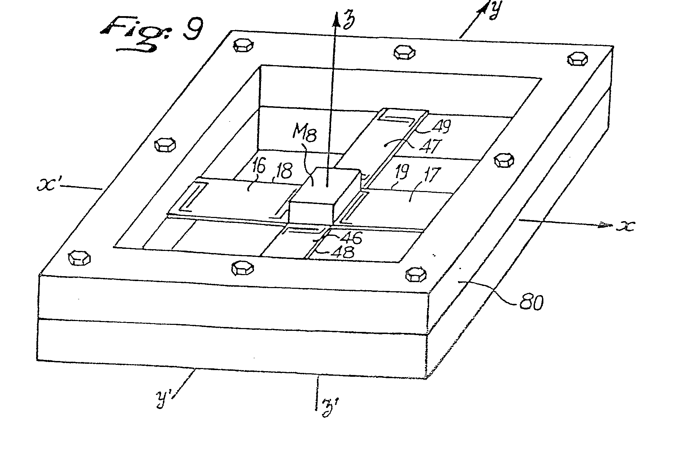

Pour mesurer cette composante $\gamma_y$, on a réalisé un autre dispositif selon l'invention, tel que représenté figure 9. Autour d'une masse sismique unique $M_8$ et d'un bâti 80 par exemple de forme carré, sont placées deux lamelles suivant deux axes perpendiculaires xx' et yy'. De la même façon que suivant le dispositif représenté figure 8, on obtient les valeurs des composantes de l'accélération $\gamma_x$ et $\gamma_z$ par les variations de fréquence des quatre oscillateurs $O_1$, $O_2$, $O'_1$ et $O'_2$. Les oscillateurs $O_1$ et $O_2$ correspondent aux portions 16 et 17 de la face supérieure de la lamelle orientée suivant x et les oscillateurs $O'_1$ et $O'_2$ aux portions 18 et 19 de la face inférieure de cette lamelle, tandis qu'on obtient les valeurs des composantes $\gamma_y$ et $\gamma_z$ par les variations de fréquence de quatre oscillateurs $O_3$, $O_4$; $O'_3$, $O'_4$ sur les portions 46, 47, 48, 49 sur la lamelle suivant l'axe yy'. La valeur de la composante $\gamma_z$ est obtenue avantageusement en effectuant la sommation des fréquences de sortie pour les oscillateurs $O_1$, $O_2$,

$O'_1$, $O'_2$ d'une part et la sommation des fréquences de sortie des oscillateurs $O_3$, $O_4$, $O'_3$, $O'_4$, d'autre part en effectuant la différence des deux fréquences ainsi obtenues; la précision sur l'accélération verticale $\gamma_z$ est donc doublée.

Suivant une variante de réalisation, le support massif 80 est de forme annulaire. Suivant une autre variante de réalisation, le support massif 80 est du type représenté figure 6.

Un autre type de réalisation est représenté figure 10. Il permet une multiplication des contraintes exercées au niveau de la lamelle. Le dispositif comporte entre la base du support massif 100 et la lamelle un axe de rotation 170 perpendiculaire à l'axe zz'. D'une part entre l'axe de rotation et la lamelle est placée une première masse sismique de masse $m_1$ 140, fixée rigidement sur la face inférieure de la lamelle, d'autre part est placée une deuxième masse sismique de masse $m_2$ 130, fixée rigidement sur la face supérieure de la lamelle. Cette deuxième masse est supérieure à la première de manière que le centre de gravité G de l'ensemble des masses sismiques soit placé au dessus de la lamelle sur l'axe zz'.

Si L et l sont respectivement les distances du centre de gravité et de la lamelle par rapport à l'axe de rotation, les moments d'inertie sont $m_1 l^2 + l_o$ et $m_2 L^2 + l_o$ où $l_o$ est le moment d'inertie par rapport au centre de gravité. De manière approchée, la tension T qui correspond à une accélération $\gamma_x$ suivant xx' s'exprime par:

$$\frac{m\gamma x}{eh} \quad \frac{L}{l}$$

tandis que la pulsation de résonance est de l'ordre de

$$\frac{2eh}{sm}\left(\frac{l}{L}\right)^2$$

où m est l'ensemble des masses sismiques. Par consequent, du point de vue de la bande passante, ces accéléromètres présentent moins d'intérêt.

Suivant une réalisation préférentielle de l'invention, les dispositifs représentés figures 2, 6, 8, 9, 10 sont réalisés de manière à ce que la lame 121 (fig. 11) soit monolithique. Dans ce but, les portions destinées à propager les ondes élastiques sont faites à partir d'une lame de cristal piézoélectrique épaisse, par exemple en quartz ou Niobate de Lithium, d'environ un millimètre d'épaisseur dans laquelle sont creusées les portions jusqu'à l'obtention d'un profil, tel que 111 représenté figure 11, avec une épaisseur au centre de l'ordre de 100 $\mu$m. Le creusement peut être effectué par exemple par usinage à bombardement ionique, par usinage mécanique ou par usinage chimique.

Dans l'exemple de réalisation de la figure 11 la masse sismique 152 est soudée directement sur la partie centrale 112 de la lamelle usinée 121. L'encastrement de la lamelle est obtenu par les boulons tels 141 et 131; une suspension 151 permet d'éviter les mouvements de rotation de cette masse. Avantageusement, un système (non représenté) permet de précontraindre la lamelle 121 longitudinalement.

Finalement suivant une variante de l'invention l'accélération suivant une direction est mesurée en remplaçant la lamelle par une corde susceptible de propager des ondes ce cisaillement.

**Revendications**

1. Accéléromètre à ondes élastiques, comportant un support massif (20), au moins une lame mince (15) susceptible de propager des ondes élastiques ainsi que des moyens pour réaliser avec elle au moins deux filtres acoustiques, ladite lame (15) étant encastrée dans le support massif (20) ainsi que dans au moins une masse sismique (M) et des moyens permettant de mesurer des variations de phase de ces filtres acoustiques ou des variations ($S_{12}$) de fréquence d'oscillateurs formés par les filtres associés à des amplificateurs (41, 42), caractérisé par le fait que l'ensemble des masses sismiques (M) et les encastrements d'une lame au moins dans le support massif délimitent aux moins deux portions dans cette lame avec lesquelles sont constituées lesdits au moins deux filtres acoustiques et que sous l'effet de la composante d'une accélération ($\gamma_x$) dans la direction de propagation des ondes élastiques les deux portions se déforment selon cette direction l'une en extension (ou compression), l'autre en compression (ou extension), une mesure différentielle de ladite variation de phase ou de fréquence résultante de ces deux déformations fournissant la valeur de la composante de l'accélération ($\gamma_x$) suivant la direction de propagation des ondes élastiques.

2. Accéléromètre suivant la revendication 1, caractérisé en ce que les deux extrémités de la lame (15) sont encastrées rigidement dans les bords d'un support (20), la lame comportant un élément de masse sismique (M) unique placée à égale distance des encastrements.

3. Accéléromètre suivant la revendication 1, caractérisé en ce que la lame (15) est encastrée rigidement en son milieu dans le pilier central d'un support massif (60), la lame comportant deux éléments de masses sismiques placés aux deux extrémités ($M_6$, $N_6$).

4. Accéléromètre suivant la revendication 1, caractérisé par le fait que les filtres sont constitués par des lignes à retard acoustiques.

5. Accéléromètre suivant la revendication 1, caractérisé en ce que les filtres acoustiques sont réalisés à partir de résonateurs, chacune des portions de la lame (45) comportant à chaque extrémité deux réseaux ($R_1$, $R_2$) réfléchissants gravés.

6. Accéléromètre suivant la revendication 5, caractérisé par le fait qu'à l'extrémité opposée au réseau ($R_1$, $R_2$) de chaque portion de lame sont disposés des transducteurs électro-acoustiques ($P_1$, $P_2$) l'un servant d'entrée, l'autre de sortie aux signaux électriques.

7. Accéléromètre suivant la revendication 5, caractérisé par le fait qu'un seul transducteur est disposé entre les deux réseaux et sert pour l'entrée et la sortie des signaux électriques.

8. Accéléromètre suivant la revendication 1, caractérisé par le fait que chaque filtre comporte un transducteur d'entrée ($P_1$) et un transducteur de sortie ($P_2$) et que le signal fourni est appliqué à un amplificateur (4) dont le signal de sortie est relié au transducteur de sortie constituant ainsi un oscillateur.

9. Accéléromètre suivant la revendication 8, caractérisé par le fait que les deux oscillateurs correspondant à chaque portion de la lame sont reliés à des moyens fournissant la différence de fréquence des deux oscillateurs ($S_{12}$).

10. Accéléromètre suivant la revendication 1, caractérisé par le fait que chaque filtre acoustique comporte un transducteur d'entrée et un transducteur de sortie, que le transducteur d'entrée est relié à un oscillateur sinusoïdal de signaux électriques, et que le signal électrique recueilli sur le transducteur de sortie est appliqué à des moyens de mesure de phase.

11. Accéléromètre suivant la revendication 10, caractérisé par le fait que les valeurs de déphasage correspondant à chaque portion de lame sont appliquées à des circuits fournissant la différence de déphasage de ces portions.

12. Accéléromètre suivant la revendication 1, caractérisé par le fait que les filtres sont reliés à des circuits permettant de mesurer leur temps de retard ainsi qu'à des circuits fournissant la différence du temps de retard des filtres des deux portions.

13. Accéléromètre suivant la revendication 1, caractérisé par le fait que des ondes élastiques excitées sont des ondes de surface du type Rayleigh.

14. Accéléromètre suivant la revendication 1, caractérisé par le fait que les ondes élastiques excitées sont des ondes de volume du type Bleustein-Gulyaev ou celles appelées S.B.W. (Skimming Bulk Waves).

15. Accéléromètre suivant la revendication 1, caractérisé par le fait que les ondes élastiques excitées sont des ondes de volume du type Auld.

16. Accéléromètre suivant la revendication 1, caractérisé en ce que entre le support massif (20) et la masse sismique (100) est placée une suspension (7) à lamelles ou à roulement à billes ou à aiguilles permettant à ladite masse de se déplacer suivant un axe parallèle à la direction de propagation des ondes acoustiques dans la lame.

17. Accéléromètre suivant la revendication 1, caractérisé par le fait que sur chaque portion de lame sont disposés sur les deux faces des lignes acoustiques formées par des transducteurs d'entrée et de sortie.

18. Accéléromètre suivant la revendication 17, caractérisé par le fait que le transducteur de sortie (93) d'une face d'une portion de lame est relié aus transducteurs d'entrée (90) de la face opposée de la même portion et que les deux lignes forment un seul filtre.

19. Accéléromètre suivant la revendication 17, caractérisé par le fait que les lignes acoustiques disposées sur les deux portions de lame et sur les deux faces forment quatre filtres, et que la lame est encastrée dans une masse sismique pouvant avoir des mouvements parallèles à la lame et perpendiculaires à cette lame.

20. Accéléromètre suivant la revendication 19, caractérisé par le fait qu'à chacun des quatre filtres correspond un oscillateur, que ces oscillateurs sont reliés à des moyens d'addition et de soustraction de fréquences et fournissent des fréquences proportionnelles l'une à l'accélération suivant une direction zz' perpendiculaire à la lame.

21. Accéléromètre suivant la revendication 19, caractérisé par le fait que deux lames placées l'une suivant la direction xx' et l'autre suivant une direction perpendiculaire yy' sont encastrées dans la masse sismique ($M_s$) et ayant chacune quatre filtres associés à des oscillateurs et que ces huit oscillateurs sont connectés à des circuits fournissant les différences de fréquence permettant de déterminer les accélérations suivant les directions xx', yy', zz'.

22. Accéléromètre suivant la revendication 1, caractérisé par le fait que la lame et la masse sismique sont obtenues par usinage ionique ou chimique à partir d'un bloc monolithique.

23. Accéléromètre suivant la revendication 1, caractérisé en ce qu'il comporte deux masses sismiques, la première (140) soudée au-dessous de la lame, la deuxième soudée au-dessus de la lame (130), sur le même axe de symétrie vertical, un axe de rotation (170) à la base de la première masse orthogonale à l'axe de symétrie et supporté par la base du support massif (100), la valeur de la première masse étant inférieure à la valeur de la deuxième masse.

**Claims**

1. Accelerometer of the elastic wave type, comprising a solid support (20), at least one thin strip (15) suitable for propagating elastic waves, and means for constituting therewith at least two acoustic filters, with said strip (15) being embedded in the solid support (20) and in at least one seismic mass (M), and means for measuring phase variations of the acoustic filters or of the frequency variations (S 12) of the oscillators formed by the filters associated with amplifiers (41, 42), characterized in that the unit of seismic mass (M) and the embedding positions of at least one strip in the solid support define at least two portions in said strip with which the said at least two acoustic filters are formed and that under the effect of the component of an acceleration ($\gamma$x) in the direction of propagation of the elastic waves the two portions are deformed in this direction, one in extension (or compression), the other in compression (or extension), with a differential measurement of said phase or frequency variation resulting from these two deformations furnishing the value of the component of acceleration ($\gamma$x) following the direction of the propagation of the elastic wave.

2. Accelerometer according to claim 1, characterized in that the two ends of the strip (15) are rigidly embedded in the edges of a support (20), with the strip comprising an element of a single seismic mass (M) placed at an equal distance from the embedding position.

3. Accelerometer according to claim 1, characterized in that the strip (15) is rigidly embedded with its center in a central post of a solid support (60), with the strip comprising two elements of seismic masses placed at the two ends (M6, N6).

4. Accelerometer according to claim 1, characterized in that the filters are formed by two acoustic delay lines.

5. Accelerometer according to claim 1, characterized in that the acoustic filters are formed from resonators, with each of the portions of the strip (45) comprising at each end two reflecting etched gratings (R$_1$, R$_2$).

6. Accelerometer according to claim 5, characterized in that at the end opposite the grating (R$_1$, R$_2$) of each portion of the strip two electro-acoustic transducers (P$_1$, P$_2$) are arranged, with one of them serving at the input and the other at the output of the electrical signals.

7. Accelerometer according to claim 5, characterized in that a single transducer is arranged between the two gratings and serves for the input and the output of the electrical signals.

8. Accelerometer according to claim 1, characterized in that each filter comprises an input transducer (P$_1$) and an output transducer (P$_2$), and that the supplied signal is led to an amplifier (4), whose output signal goes to the output transducer which thus constitutes an oscillator.

9. Accelerometer according to claim 8, characterized in that the two oscillators which correspond to each portion of the strip are connected to means supplying the frequency difference of the two oscillators (S 12).

10. Accelerometer according to claim 1, characterized in that each acoustic filter comprises an input transducer and an output transducer, that the input transducer is connected to a sinusoidal oscillator of electrical signals and that the electrical signal which is picked up at the output transducer is transferred to the phase measuring means.

11. Accelerometer according to claim 10, characterized in that the values of dephasing corresponding to each portion of the strip are applied to the circuits furnishing the dephasing difference of said portions.

12. Accelerometer according to claim 1, characterized in that the filters are connected to circuits allowing the measuring of their delay time and to the circuits supplying the difference of the delay time of the filters of the two portions.

13. Accelerometer according to claim 1, characterized in that the excited elastic waves are surface waves of the Rayleigh type.

14. Accelerometer according to claim 1, characterized in that the excited elastic waves are volume waves of the Bleustein-Gulyaev type or those called S.B.W. (Skimming Bulk Waves).

15. Accelerometer according to claim 1, characterized in that the excited elastic waves are volume waves of the Auld type.

16. Accelerometer according to claim 1, characterized in that between the solid support (20) and the seismic mass (100) a suspension (7) of blades or balls or roller bearings is provided which allows said mass to move along an axis parallel to the direction of propagation of the acoustic waves in the strip.

17. Accelerometer according to claim 1, characterized in that on each portion of the strip there are arranged on both faces acoustic lines formed by the input and output transducers.

18. Accelerometer according to claim 17, characterized in that the output transducer (93) on one face of a portion of the strip is connected to the input transducers (90) of the opposite face of the same portion, and that the two lines form a single filter.

19. Accelerometer according to claim 17, characterized in that the acoustic lines arranged on the two portions of the strip and on the two faces form four filters, and that the strip is embedded in a seismic mass which is capable of being moved parallel to the strip and perpendicular to the strip.

20. Accelerometer according to claim 19, characterized in that one oscillator corresponds to each of the four filters, that these oscillators are connected to means of addition and subtraction of frequencies and supply proportional frequence, one of which is accelerated in a direction zz' which is perpendicular to the strip.

21. Accelerometer according to claim 19, characterized in that the two strips, one of which is placed following the direction xx' and the other following a perpendicular direction yy', are embedded in the seismic mass (M 8), and with each having four filters associated with oscillators, and that the eight oscillators are connected to circuits which supply the differences in frequency allowing to determine the accelerations following the directions xx', yy', zz'.

22. Accelerometer according to claim 1, characterized in that the strip and the seismic mass are obtained by an ionic or chemical manufacturing process from a monolithic block.

23. Accelerometer according to claim 1, characterized in that it comprises two seismic masses with the first one (140) of them soldered below the strip, the second one soldered above the strip (130), on the same vertical axis of symmetry, an axis of rotation (170) at the basis of the first mass, orthogonal at the symmetrical axis and which is supported by the basis of the solid support (100), with the value of the first mass being inferior to the value of the second mass.

**Patentansprüche**

1. Beschleunigungsmesser des elastischen Wellentyps, der einen massiven Halter (20) einschliesst, mindestens einen dünnen Streifen (15), der zur Ausbreitung elastischer Wellen geeignet ist und Mittel, um damit mindestens zwei akustische Filter zu bilden, wobei der genannte Streifen (15) eingebettet ist in den massiven Halter (20) und in mindestens einer seismischen Masse (M), und Mitteln zur Messung der Phasenvariationen der akustischen Filter oder der Frequenzvariationen ($S_{12}$) der Oszillatoren, die durch die mit Verstärkern (41, 42) verbundenen Filter gebildet sind, dadurch gekennzeichnet, dass die Einheit der seismischen Massen (M) und die Einbettungen mindestens eines Streifens in dem massiven Halter mindestens zwei Stellen in dem genannten Streifen festlegen, mit denen die mindestens zwei genannten Filter gebildet werden, und dass unter der Wirkung der Komponente einer Beschleunigung ($\gamma_x$) in der Richtung der Ausbreitung der elastischen Wellen die zwei Stellen sich in dieser Richtung deformieren, die eine in Ausdehnung (oder Zusammenziehung), die andere in Zusammenziehung (oder Ausdehnung), wobei eine Differentialmessung der genannten, von den beiden Deformierungen resultierenden Phasen- oder Frequenzvariation den Wert der Beschleunigungskomponente ($\gamma_x$) liefern, die der Ausbreitungsrichtung der elastischen Wellen folgt.

2. Beschleunigungsmesser gemäss Anspruch 1, dadurch gekennzeichnet, dass die beiden Seiten des Streifens (15) fest in den Rändern eines Halters (20) eingebettet sind, wobei der Streifen ein einzelnes seismisches Massenelement (M) enthält, das in gleichem Abstand zu den Einbettungen plaziert ist.

3. Beschleunigungsmesser gemäss Anspruch 1, dadurch gekennzeichnet, dass der Streifen (15) an seiner Mitte fest in einem mittleren Ständer des massiven Halters (60) eingebettet ist, wobei der Streifen zwei seismische Massenelemente enthält, die an den beiden Enden ($M_6$, $N_6$) plaziert sind.

4. Beschleunigungsmesser gemäss Anspruch 1, dadurch gekennzeichnet, dass die Filter aus akustischen Verzögerungsleitungen gebildet sind.

5. Beschleunigungsmesser gemäss Anspruch 1, dadurch gekennzeichnet, dass die akustischen Filter von Resonatoren ausgebildet sind, wobei jede Stelle des Streifens (45) an jedem Ende zwei eingeätzte Reflexionsgitter ($R_1$, $R_2$) enthält.

6. Beschleunigungsmesser gemäss Anspruch 5, dadurch gekennzeichnet, dass das Ende gegenüber dem Reflexionsgitter ($R_1$, $R_2$) einer jeden Stelle des Streifens electro- akustische Wandler ($P_1$, $P_2$) aufweist, wovon der eine dem Eintritt und der andere dem Austritt der elektrischen Signale dient.

7. Beschleunigungsmesser gemäss Anspruch 5, dadurch gekennzeichnet, dass ein einzelner Wandler zwischen den beiden Reflexionsgittern angeordnet ist und als Eintritt und Austritt der elektrischen Signale dient.

8. Beschleunigungsmesser gemäss Anspruch 1, dadurch gekennzeichnet, dass jeder Filter eine Eintritts- ($P_1$) und einen Austrittswandler ($P_2$) einschliesst, und dass das gelieferte Signal zu einem Verstärker (4) geleitet wird, dessen Ausgangssignal dem Austrittswandler zugeleitet wird, der so einen Oszillator darstellt.

9. Beschleunigungsmesser gemäss Anspruch 8, dadurch gekennzeichnet, dass die zwei Oszillatoren, die jeder der Stellen auf dem Streifen entsprechen, mit Mitteln verbunden sind, welche die Frequenzdifferenz der beiden Oszillatoren ($S_{12}$) liefern.

10. Beschleunigungsmesser gemäss Anspruch 1, dadurch gekennzeichnet, dass jeder der akustischen Filter einen Eintritts- und einen Austrittswandler einschliesst, dass der Eintrittswandler mit einem sinusförmigen Oszillator elektrischer Signale verbunden ist, und dass das elektrische Signal, das vom Austrittswandler abgenommen wird, auf die Mittel zur Phasenmessung übertragen wird.

11. Beschleunigungsmesser gemäss Anspruch 1, dadurch gekennzeichnet, dass die Phasenverschiebungswerte, die einer jeden Stelle auf dem Streifen entsprechen, auf die Schaltungen übertragen werden, welche den Phasenverschiebungsunterschied dieser Stellen liefern.

12. Beschleunigungsmesser gemäss Anspruch 1, dadurch gekennzeichnet, dass Filter mit Schaltungen verbunden sind, die ein Messen ihrer Verzögerungszeiten erlauben, und mit Schaltungen, welche den Unterschied der Verzögerungszeiten der Filter den beiden Stellen angeben.

13. Beschleunigungsmesser gemäss Anspruch 1, dadurch gekennzeichnet, dass die erregten elastischen Wellen Oberflächenwellen des Typs Rayleigh sind.

14. Beschleunigungsmesser gemäss Anspruch 1, dadurch gekennzeichnet, dass die erregten elastischen Wellen Volumenwellen des Typs Bleustein-Gulyaev sind oder solche, die S.B.W. (Skimming Bulk Waves) gennant werden.

15. Beschleunigungsmesser gemäss Anspruch 1, dadurch gekennzeichnet, dass die erregten elastischen Wellen Volumenwellen des Typs Auld sind.

16. Beschleunigungsmesser gemäss Anspruch 1, dadurch gekennzeichnet, dass zwischen dem massiven Halter (20) und der seismischen Masse (100) eine Stützvorrichtung (7) aus Lamellen bzw. Kugel- oder Rollenlagern plaziert ist, die es der genannten Masse ermöglicht, sich entlang einer Achse zu verlagern, die einer Achse folgt, welche parallel zur Bewegungsrichtung der akustischen Wellen in dem Streifen liegt.

17. Beschleunigungsmesser gemäss Anspruch 1, dadurch gekennzeichnet, dass auf jeder Stelle des Streifens auf beiden Flächen akustische Leitungen angeordnet sind, die durch die Eintritts- und Austrittswandler gebildet werden.

18. Beschleunigungsmesser gemäss Anspruch 17, dadurch gekennzeichnet, dass der Austrittswandler (93) auf einer Seite einer Stelle des Streifens mit den Eintrittswandlern (90) auf der Fläche gegenüber der gleichen Stelle verbunden ist, und dass die beiden Leitungen einen einzigen Filter bilden.

19. Beschleunigungsmesser gemäss Anspruch 17, dadurch gekennzeichnet, dass die akustischen Leitungen, die auf den beiden Stellen des Streifens und auf den beiden Flächen aufgebracht sind, vier Filter bilden, und dass der Streifen in einer seismischen Masse eingesetzt ist, die Bewegungen parallel zu dem Streifen und senkrecht zu dem Streifen erlaubt.

20. Beschleunigungsmesser gemäss Anspruch 19, dadurch gekennzeichnet, dass ein Oszillator einem jeden der vier Filter entspricht, dass diese Oszillatoren mit Addier- und Substrahier-Mitteln der proportionalen Frequenzen verbunden sind, von denen eine in einer Richtung zz', senkrecht zu dem Streifen, beschleunigt wird.

21. Beschleunigungsmesser gemäss Anspruch 19, dadurch gekennzeichnet, dass die beiden Streifen, von denen einer in der Richtung xx' und der andere in der senkrechten Richtung yy' verläuft, in der seismischen Masse ($M_8$) eingebettet sind, und wobei jeder vier Filter hat, die mit Oszillatoren verbunden sind, und dass die acht Oszillatoren mit Schaltungen verbunden sind, welche die Frequenzunterschiede liefern, die es ermöglichen, die Beschleunigung in den Richtungen xx', yy', zz' zu bestimmen.

22. Beschleunigungsmesser gemäss Anspruch 1, dadurch gekennzeichnet, dass der Streifen und die seismische Masse durch ein ionisches oder chemisches Herstellungsverfahren aus einem monolithischen Block erstellt wird.

23. Beschleunigungsmesser gemäss Anspruch 1, dadurch gekennzeichnet, dass er zwei seismische Massen enthält, wovon die erste (140) unter dem Streifen angeschweisst ist, die zweite über dem Streifen (130) angeschweisst ist, auf der gleichen senkrechten Symmetrieachse; sowie eine Drehachse (170) an der Basis der ersten Masse, rechtwinklig an der Symmetrieachse, und die an der Basis des massiven Halters (100) gestützt wird, wobei der Wert der ersten Masse kleiner ist als der Wert der zweiten Masse.

Fig.1

0 017 554

Fig.2

Fig.3

## Fig. 4

## Fig. 5

## Fig. 6

2

Fig. 7

Fig. 10

Fig. 11

*Fig: 8*

Fig. 9